# FASCICULE DE BREVET EUROPEEN

(11) **EP 2 954 284 B1**
(45) Date de publication et mention de la délivrance du brevet: **15.03.2017**
(21) Numéro de dépôt: 14703322.9
(22) Date de dépôt: 04.02.2014
(51) Int. Cl.: G01B 5/28, G01B 7/34, G01B 11/30, G01B 21/30, G01N 21/954

(54) **DISPOSITIF DE MESURE DE L'ETAT DE SURFACE D'UNE SURFACE**
VORRICHTUNG ZUM MESSEN DER OBERFLÄCHENRAUHIGKEIT EINER OBERFLÄCHE
DEVICE FOR MEASURING THE SURFACE ROUGHNESS OF A SURFACE

(30) Priorité: 07.02.2013 FR 1351064
(43) Date de publication de la demande: 16.12.2015
(73) Titulaire: Commissariat à l'Énergie Atomique et aux Énergies Alternatives, 75015 Paris (FR)
(72) Inventeur: GIRARD, Claude, F-21850 Saint Apollinaire (FR)
(74) Mandataire: Brevalex
(86) Numéro de dépôt international: PCT/EP2014/052097
(87) Numéro de publication internationale: WO 2014/122107

(56) Documents cités:
- EP-A2- 0 076 144
- WO-A1-2012/120100
- FR-A1- 2 972 526
- GB-A- 2 341 244
- US-A- 2 892 257
- US-A- 4 167 066

## Description

### DOMAINE TECHNIQUE

L'invention se rapporte au domaine de la mesure de l'état de surface d'une surface et notamment à la détermination de sa rugosité de surface dans le but de qualifier cette même surface.

La détermination de l'état de surface des surfaces est devenue une problématique d'importance en ce qui concerne les industries de pointe, telles que l'aéronautique, l'automobile ou encore la production d'énergie. En effet, l'état de surface, et plus particulièrement la rugosité de surface, détermine certaines des caractéristiques et des propriétés des surfaces, telles que leur tenue à la corrosion et à l'usure et leurs propriétés d'adhérence et de glissement.

Dans le domaine de la production d'énergie, tel que le nucléaire, cette problématique intervient notamment au niveau des conduites de gaz des installations de production d'énergie. L'état de surface de la surface interne de ces conduites a un impact important sur les pertes de charges. En effet, cet état de surface est l'une des caractéristiques principales qui déterminent le type d'écoulement des gaz qui transitent dans ces conduites. Ainsi, une surface interne de conduite présentant une forte rugosité a pour conséquence un écoulement en régime turbulent et présente donc une forte perte de charge. Il est donc primordial de connaître, et le cas échéant, de corriger l'état de surface des conduites de gaz.

Ainsi, l'invention concerne plus particulièrement un dispositif de mesure de l'état de surface d'une surface.

### ÉTAT DE LA TECHNIQUE ANTÉRIEURE

La mesure de l'état de surface d'une surface est généralement réalisée à l'aide d'un dispositif du type profilomètre. Ce type de dispositif est classé en deux catégories distinctes, les profilomètres de contact et les profilomètres optiques.

Les profilomètres de contact comportent généralement une sonde destinée à être en contact avec la surface, un moyen de contrainte de la sonde sur la surface,
un moyen de mesures du déplacement de la sonde et un moyen de déplacement de la sonde le long de la surface. La sonde est généralement une pointe en matériau dur, tel que le diamant, présentant un diamètre de pointe de faible dimension.

Le principe de ce type de profilomètre consiste à déplacer la sonde le long de la surface par l'action du moyen de déplacement, une contrainte constante de la sonde sur la surface étant exercée par le moyen de contrainte pendant le déplacement. Lors de ce même déplacement, le moyen de mesure du déplacement de la sonde enregistre les déplacements de la sonde suivant un axe perpendiculaire à la surface et permet ainsi d'obtenir un profil de la surface. Ce profil, une fois traité, donne une information sur l'état de surface de la surface ainsi que sur sa rugosité de surface.

Néanmoins, si ce type de profilomètre est particulièrement adapté pour la caractérisation de surfaces planes telles que celle d'une pièce de carrosserie ou le profil longitudinal extérieur d'une pièce allongée, leurs moyens de déplacement sont généralement inadaptés pour la caractérisation de la surface interne d'une pièce creuse.

Afin de remédier à cet inconvénient, il est également connu de l'état de la technique, et notamment de la demande de brevet FR 2 972 526 A1, des profilomètres adaptés pour mesurer l'état de surface d'un tube en forme de section de tore. De tels profilomètres comportent :
- une sonde destinée à être en contact avec la surface interne du tube,
- un moyen de contrainte réglable destiné à contraindre la sonde sur la surface interne avec une contrainte sensiblement constante et réglable, ledit moyen de contrainte réglable étant fourni par une masselotte,
- un moyen de mesure du déplacement de la sonde agencé pour mesurer le déplacement de la sonde le long d'un axe sensiblement perpendiculaire à la surface,
- un moyen de déplacement relatif de la sonde adapté pour déplacer la sonde relativement à la surface uniquement selon une trajectoire suivant une génératrice prédéfinie du tore.

Néanmoins si de tels profilomètres permettent de mesurer l'état de surface le long d'une génératrice du tube ceci avec une contrainte de la sonde sur la surface parfaitement contrôlée, ils ne sont pas adaptés pour permettre une telle mesure sur une génératrice du tube autre que celle prédéfinie pour laquelle ils sont configurés. En effet, le moyen de déplacement relatif, afin d'assurer une bonne compensation de la courbure de surface de la génératrice, n'est adapté que pour déplacer la sonde selon une seule génératrice prédéfinie du tube. Ainsi tout changement de génératrice demande un démontage de la sonde afin d'adapter son montage vis-à-vis du moyen de déplacement relatif. De plus, même avec un démontage de la sonde, certaines génératrices restent inaccessibles avec de tels profilomètres ceci en raison du moyen de contrainte utilisé qui est assujetti à la gravité. On peut également noter que de plus la force appliquée dépendant directement de la disposition de la masselotte, sans réglage adéquat, la contrainte appliquée entre la sonde et la surface ne sera pas identique pendant la mesure le long de deux génératrices différentes

### EXPOSÉ DE L'INVENTION

L'invention a pour objet de remédier à ces inconvénients.

Un but de la présente invention est donc de fournir un dispositif de mesure de l'état de surface de la surface interne d'un tube dans des conditions de mesures reproductibles ceci selon au moins deux génératrices du tube sans nécessiter un quelconque démontage de la sonde ou un réglage du moyen de contrainte de la sonde sur la surface interne.

A cet effet l'invention concerne un dispositif de mesure de l'état de surface de la surface interne d'un élément creux s'étendant selon une ligne directrice et présentant une section interne transverse à ladite ligne directrice sensiblement constante comportant :
- une sonde destinée à être en contact avec ladite surface interne,
- un moyen de contrainte destiné à contraindre la sonde sur la surface interne avec une contrainte sensiblement constante et réglable,
- un moyen de mesure du déplacement de la sonde agencé pour mesurer le déplacement de la sonde le long d'un axe sensiblement perpendiculaire à la surface interne,
- un premier moyen de déplacement relatif de la sonde, adapté pour déplacer la sonde relativement à la surface interne selon une trajectoire suivant uniquement la ligne directrice,
le dispositif comportant en outre un deuxième moyen de déplacement relatif adapté pour déplacer la sonde entre au moins deux positions le long de la section interne, le moyen de contraintes étant adapté pour contraindre la sonde sur la surface quelle que soit la position de la sonde le long de la section interne.

Un tel dispositif permet un déplacement de la sonde le long de la surface interne de l'élément creux selon la direction de la ligne directrice et ceci pour au moins deux positions différentes sur la section interne quelles que soient ces deux positions. En effet, avec un tel deuxième moyen de déplacement relatif il est possible de mettre en oeuvre le premier moyen de déplacement relatif pour faire la mesure de l'état de surface le long de la surface interne de l'élément creux selon la direction de la ligne directrice ceci pour une première position puis de déplacer la sonde dans une deuxième position de la section interne pour faire une mesure identique à cette deuxième position.

De plus, le moyen de contrainte, en permettant de contrôler la force aussi bien dans la première que dans la deuxième position, autorise des conditions de force identiques pour la mesure de surface selon la première et la deuxième position offrant ainsi la possibilité de comparer de telles mesures.

Le moyen de contrainte comprend au moins un aimant et un électro-aimant, l'un étant solidaire de la sonde tandis que l'autre est agencé de manière à rester à distance constante de la ligne directrice en l'absence de mise en oeuvre du deuxième moyen de déplacement relatif.

Un tel moyen de contrainte en n'étant pas tributaire de la gravité et en étant réglable autorise un bon contrôle des forces appliquées sur la sonde pour la contraindre sur la surface interne de l'élément creux.

Le deuxième moyen de déplacement relatif peut comprendre un support sur lequel est montée la sonde, le support étant mobile vis-à-vis du premier moyen de déplacement relatif de manière à déplacer la sonde entre les au moins deux positions le long de la section interne.

Un tel support permet de fournir une assise stable lors du déplacement de la sonde relativement à la section interne de l'élément creux.

Le dispositif peut être adapté pour mesurer l'état de surface d'un élément creux présentant une section interne transverse qui est courbe, le deuxième moyen de déplacement relatif étant préférentiellement adapté pour déplacer la sonde le long de la section interne.

Avec une telle configuration, le dispositif permet de mesurer l'état de surface de la surface interne d'un élément creux ceci sur tout le pourtour de sa surface interne.

La section interne peut être circulaire, le deuxième moyen de déplacement relatif étant adapté pour déplacer la sonde selon une trajectoire circulaire

Le premier moyen de déplacement relatif peut être adapté pour déplacer le support de sonde relativement à l'élément creux le long de la ligne directrice, le deuxième moyen de déplacement relatif comprenant un montage mobile du support de sonde autour de la ligne directrice.

Un tel montage mobile du support autour de la ligne directrice autorise une mesure de l'état de surface le long de toute la section interne de l'élément creux.

L'un de l'aimant et de l'électro-aimant peut être solidaire au support de sonde, l'autre étant solidaire à la sonde.

Le support de sonde, par la fonction de support qu'il offre à la sonde lors de son déplacement le long de la section interne fournit une assise stable pour contraindre la pointe sur la surface interne de l'élément creux. Ainsi en solidarisant l'un de l'aimant et de l'électro-aimant au support, il est possible d'appliquer une force stable pendant le déplacement de la sonde selon une trajectoire suivant la ligne directrice.

Le dispositif peut être adapté pour mesurer l'état de surface d'un élément creux s'étendant selon une ligne directrice courbe, préférentiellement selon une section de cercle.

Un tel dispositif permet de caractériser la surface interne d'éléments creux courbes pour laquelle les dispositifs de l'art antérieur ne sont généralement pas adaptés.

Il peut être prévu un système de désengagement de la sonde qui est adapté pour déplacer la sonde à distance de la surface interne lorsque le dispositif n'est pas en configuration de mesure.

Un tel système permet de désengager la sonde lorsque le dispositif n'est pas en cours de la caractérisation de la surface interne de l'élément creux, tel que par exemple lors du déplacement de la sonde le long de la section de l'élément au moyen du deuxième moyen de déplacement relatif ou encore lors de la mise en place ou du retrait de l'élément creux sur le dispositif .

Le déplacement de la sonde par le deuxième moyen de déplacement relatif est indexé sur au moins deux positions de la sonde vis-à-vis de la section interne de l'élément creux .

Une telle indexation du déplacement permet, lorsque le dispositif est successivement utilisé pour caractériser plusieurs éléments creux, de comparer les mesures
réalisées à des positions précises vis-à-vis de la section de chacun des éléments creux, ces positions étant indexées.

L'invention concerne également un système de mesure comprenant :
- un dispositif de mesure de l'état de surface, et
- une électronique de contrôle du dispositif,

Le dispositif étant un dispositif selon l'invention.

Un tel système de mesure permet d'au moins partiellement automatiser l'utilisation du dispositif selon l'invention.

Le système électronique peut comporter un contrôleur électronique commandé informatiquement et un ordinateur.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre schématiquement un dispositif de mesure d'état de surface lors de sa mise en oeuvre,
- la figure 2 illustre une vue rapprochée du support de tête de mesure et de la tête de mesure du dispositif illustré sur la figure 2,
- la figure 3 illustre une vue rapprochée en trois dimensions d'un dispositif selon un premier mode de réalisation de l'invention
- la figure 4 illustre une vue en coupe et en trois dimensions du dispositif illustré sur la figure 4,
- la figure 5 illustre une vue d'ensemble d'un système de mesure comportant un dispositif illustré sur les figures 3 et 4,
- la figure 6 illustre une sonde équipant un dispositif selon un deuxième mode de réalisation,
- la figure 7 illustre le principe de fonctionnement de la sonde illustrée sur la figure 6.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

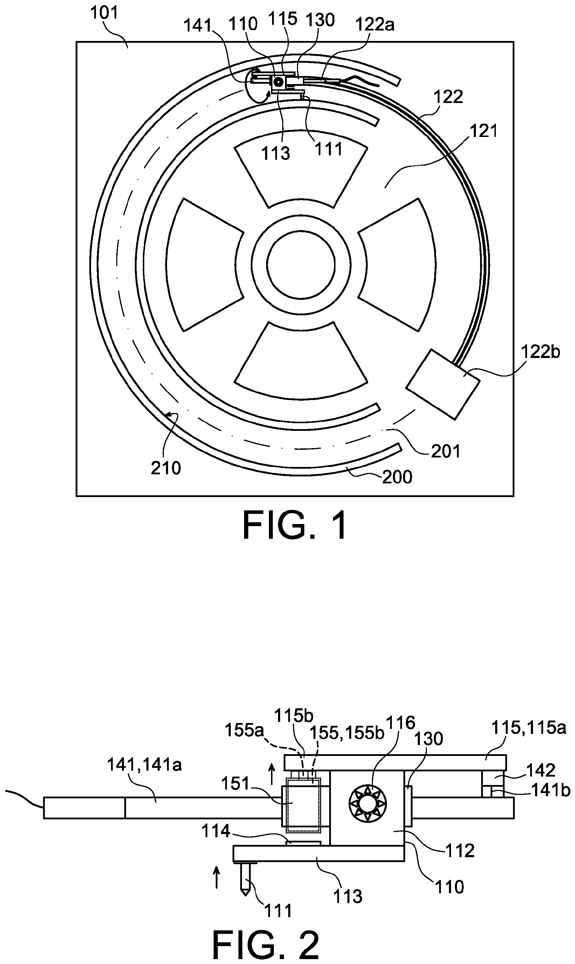

La figure 1 illustre schématiquement un dispositif 100 de mesure de l'état de surface de la surface interne 210 d'un tube 200 présentant une forme générale en portion de tore.

Un tel tube 200 forme un élément creux qui s'étend selon une ligne directrice 201 en portion de cercle. Le tube 200 comporte une section interne transverse courbe de forme circulaire. Dans l'application qui est particulièrement visée par l'invention, la ligne directrice 201 représente une portion d'un cercle d'un diamètre compris entre 30 cm et 1 m pour une section interne transverse qui présente un diamètre compris entre 3 et 30 cm.

On entend ci-dessus et dans le reste de ce document par section interne courbe que la section interne ne présente pas de discontinuité dans sa courbure, telle qu'un angle, qui pourrait limiter le déplacement d'une sonde le long de ladite section.

Un tel dispositif 100 comporte, comme cela est illustré sur les figures 1 et 2 :
- une embase 101,
- un plateau 121 supportant le tube 200 et monté pivotant sur l'embase 101,
- un bras 122 s'étendant selon une ligne courbe dont la courbure est sensiblement identique à celle de la ligne directrice 201, le bras 122 comportant une première et une seconde extrémité 122a, 122b et étant agencé de manière à ce que sa première extrémité 122a soit introduite dans le tube 200 lors du pivotement du plateau 121,
- un support 141 de sonde monté pivotant sur la première extrémité 122a du bras 122 autour d'un axe sensiblement tangent à la ligne directrice 201,
- une tête 110 de mesure montée sur ledit support 141, ladite tête comportant une sonde 111 qui est contrainte le long de la surface interne 210 du tube 200 afin de mesurer l'état de surface de la surface interne 210 du tube 200.

L'embase 101 fait office de support pour le reste du dispositif 100. L'embase 101 comporte notamment un système de motorisation, non illustré, pour permettre le pivotement contrôlé du plateau 121. Le système de motorisation est préférentiellement indexé pour autoriser un suivi des déplacements du plateau 121, et donc du tube 200, lors de la mesure de l'état de surface de la surface interne 210 du tube 200.

Le plateau 121 supporte le tube 200 et permet, de par son montage pivotant sur l'embase de déplacer le tube 200 relativement au bras, et donc de la tête 110 qui est montée sur la première extrémité 122a de ce dernier. Le plateau 121 comporte un système de maintien, non illustré, tel que des liens ou une surface de support, adapté pour maintenir le tube 200 lorsque ce dernier est installé sur le plateau 121. Le système de maintien est préférentiellement adapté pour limiter les mouvements du tube 200 lors de ses déplacements liés à la mesure de l'état de surface de sa surface interne 210.

Le bras 122 a pour fonction de supporter la tête 110 lors du déplacement du tube 200 par le plateau afin de permettre l'introduction de la tête 110 à l'intérieur de ce même tube 200. A cet effet, le bras 122 s'étend selon la ligne directrice 201 du tube de manière à ce que le bras soit introduit dans le tube en suivant la ligne directrice 201 lors du pivotement du plateau 121. Le bras 122 comporte une section transversale de faible dimension vis-à-vis du diamètre du tube 200. Afin de permettre un maintien du bras 122 sur l'embase 101 sans que ce maintien n'interfère avec le déplacement du tube 200, le bras 122 est monté sur le support au niveau de sa deuxième extrémité 121a .

Selon la configuration illustrée sur la figure 1, le bras 122 fait également
office de guide pour les câbles d'alimentation et de commande de la tête 110, non illustrés. Une telle configuration permet de réduire les risques d'entrave du déplacement du tube 200 par les câbles lors de la mesure de l'état de surface de la surface interne 210 du tube 200. Selon une possibilité particulièrement avantageuse, et non illustrée, de cette configuration, le bras 122 peut être creux de manière à offrir un passage pour les câbles d'alimentation et de commande.

Le plateau 121, son montage motorisé et pivotant sur l'embase 101 et le bras forment un moyen de déplacement relatif de la sonde 111 adapté pour déplacer la sonde 111 relativement à la surface interne 210 du tube 200 selon une trajectoire suivant uniquement la ligne directrice 201. Dans ce mode de réalisation, ce moyen de déplacement relatif est agencé pour déplacer le tube 200 par rapport à la sonde 111 de manière à ce que lors du déplacement de tube 200 la sonde 111 parcours la surface interne 210 du tube 200.

Le support de tête 130, schématiquement illustré sur la figure 2, est monté pivotant sur le bras 122 autour d'un axe sensiblement tangent à la ligne directrice 201 de manière à faire pivoter autour de ce même axe la tête 110. Un tel déplacement de la tête 110 autour de l'axe sensiblement tangent à la ligne directrice permet, lorsque la sonde 111 est contrainte contre la surface interne du tube 210, de déplacer la sonde le long de la section du tube 200.

Le montage pivotant du support de tête 130 sur le bras 122 est préférentiellement motorisé de manière à autoriser un déplacement automatisé du support de tête 130 même si ce dernier est inaccessible à l'opérateur du dispositif 100 tel par exemple lorsque le tube 200 est dans une position dans laquelle le support de tête 150 est logé dans le tube 200.

Le support de tête et son montage pivotant autour de la première extrémité 122a du bras 122 forment un deuxième moyen de déplacement relatif adapté pour déplacer relativement la tête de mesure, et donc la sonde, par rapport à la surface interne 210 du tube 200 entre au moins deux positions le long de sa section interne. Dans la configuration illustrée sur la figure 1, le support de tête et son montage pivotant autour de la première extrémité 122a du bras 122 forment un deuxième moyen de déplacement relatif adapté pour déplacer relativement la tête de mesure 110, et donc la sonde 111, le long de la section interne du tube 200.

Selon une possibilité avantageuse de l'invention, le déplacement du support de tête 130 par rapport au bras 122 est indexé pour plusieurs positions du support de tête 130, ceci de manière à permettre une reproductibilité quant aux positions des mesures d'état de surface le long de la section. Ainsi, avec une telle indexation, les mesures d'état de surface sur les positions indexées peuvent être comparées entre deux tubes différents. Le dispositif peut, selon cette possibilité, comporter quatre positions indexées réparties à équidistance les unes des autres par rapport à la section du tube 200.

Le support de tête 130 comporte, comme cela est illustré sur la figure 2 :
- un capteur optique 141 de mesure de déplacement de la sonde 111 agencé pour mesurer le déplacement de la sonde 111 le long d'un axe sensiblement perpendiculaire à la surface interne 210,
- un électro-aimant 151 qui est adapté pour interagir avec un aimant 114 qui est solidaire à la sonde 111 de manière à contraindre la sonde 111 sur la surface interne 210 du tube 200,
- un actionneur adapté pour désengager la sonde de la surface interne du tube 200 lorsque le dispositif 100 n'est pas en configuration de caractérisation de la surface interne 210 du tube, telle que par exemple lorsque la sonde 111 est déplacée le long de la section interne du tube 200.

Le capteur optique 141 est un capteur de mesure de déplacement à mesure confocale selon un principe identique à celui présenté dans la figure 1 de la demande de brevet FR 2 972 526 A1.

Le capteur 141 présente un corps de capteur 141a
sensiblement longitudinal. Le corps de capteur 141a est disposé selon l'axe de pivotement du support de tête.

Le capteur 141 est un capteur à mesure confocale de type radial, c'est-à-dire présentant un axe optique de mesure perpendiculaire au corps du capteur 141a, et donc perpendiculaire au levier à l'axe de pivotement du support de tête 130. L'axe optique 141b du capteur optique 141 est disposé de manière à ce que le rayonnement lumineux issu du capteur optique 141 soit réfléchi par une surface réfléchissante 142 qui est solidaire en mouvement à la sonde 111 de manière à mesurer les déplacements de cette surface 142, et donc de la sonde 111, relativement au capteur optique 140 et du support de tête 130.

L'actionneur 155 est actionneur électromagnétique comprenant une tige 155a d'actionnement déplacée au moyen d'un deuxième électro-aimant 155b entre une position dans laquelle la sonde 111 est engagée en contact avec la surface interne 210 du tube 200 et une position dans laquelle la sonde 111 est désengagée de la surface interne 210 du tube 200. Le deuxième électro-aimant 155b est solidaire du support de tête 130, la tige 155a étant agencée par rapport au deuxième électro-aimant 155b de manière à ce que cette dernière s'engage avec la tête 110 de mesure pour désengager la sonde 111.

La tête 110 de mesure est montée sur le support de tête 130 pivotant autour d'un axe sensiblement perpendiculaire à l'axe de pivotement du support de tête 130 et à une ligne passant par le point de contact entre la sonde 111 et la surface interne 210 du tube 200 et le point correspondant à l'intersection de l'axe de pivotement de la tête 110 et la ligne directrice 201.

La tête 110 comporte :
- une partie centrale 112 par lequel la tête 110 est montée pivotante sur le support de tête 130,
- un premier levier 113 solidaire à la partie centrale 112,
- une sonde 111 qui est montée sur le premier levier 113 à une extrémité du premier levier 113 qui est opposée de la partie centrale 112,
- un aimant 114 monté sur le premier levier 113 en regard du premier électro-aimant 151 de manière à ce que l'actionnement du premier électro-aimant induise une force à l'aimant 114 tendant à déplacer le premier levier 113 relativement au premier électro-aimant,
- un deuxième levier 115 solidaire à la partie centrale 112 et sensiblement parallèle au premier levier 113,
- la surface réfléchissante 142 solidaire du deuxième levier 115, ladite surface réfléchissante 142 étant agencée sur le deuxième levier 115 en regard du capteur optique 141.

La partie centrale 112 est montée pivotante sur le support de tête 130 au moyen de deux roulements à billes. Ainsi, la tête 110 est libre de pivoter par rapport à l'axe de pivotement.

Le premier levier 113 s'étend longitudinalement à partir de la partie centrale 112 en direction du bras 122.

La sonde 111 est montée à l'extrémité du premier levier en regard de la surface interne 210 du tube 200. Ainsi, la sonde est libre de pivoter vis-à-vis du support de tête 130. De cette manière, la sonde peut se déplacer librement par rapport au support de tête 130 dans une direction sensiblement perpendiculaire à la surface interne 220 du tube 200.

La sonde 110 peut prendre la forme d'une pointe en matériau dur, tel que du diamant, du carbure de tungstène ou du carbure de silicium. La pointe, généralement de forme conique, présente un rayon de courbure de pointe le plus faible possible. Pour les applications à la mesure de l'état de surface de la surface interne 210 d'un tube 200, un rayon de pointe de l'ordre de 2 µm est souhaitable.

L'aimant 114 est monté sur le premier levier 113 en regard du premier électro-aimant 151. Ainsi la mise en oeuvre du premier électro-aimant 151 permet de générer une force entre l'électro-aimant et l'aimant, qui peut, lorsqu'elle est adaptée, faire pivoter la tête 110 et contraindre la sonde 110 sur la surface interne 210 du tube 200. Cette force peut être significativement supérieure à celle de la force de gravité qui s'applique sur la sonde 111. Ainsi, l'aimant 114 et l'électro-aimant 151 forment un moyen de contrainte adapté pour contraindre la sonde 111 sur la surface interne 210 quelle que soit la position de la sonde 111 le long de la section interne 210, la contrainte appliquée à la sonde 111 n'étant pas dépendante de la gravité.

Le deuxième levier 115 s'étend, par une portion 115a dite longue, à partir de la partie centrale 112 principalement dans la direction opposée à celle du premier levier 113. Le deuxième levier 115 comporte également une portion 115b, dite courte, qui s'étend dans la même direction que celle du premier levier 113. La portion courte 115b est adaptée pour fournir une surface d'appui pour la tige 155a de l'actionneur 155. Ainsi, l'actionnement de l'actionneur 155 entraîne le déplacement de la tige 155a en appui de la portion courte 115b du deuxième levier 115 de manière à faire pivoter la tête de mesure 110 et à désengager la sonde 111 de la surface interne 210 du tube 200.

Ainsi, le deuxième levier 115 et l'actionneur 155 forment ensemble un système de désengagement de la sonde qui est adapté pour déplacer la sonde 111 à distance de la surface interne 210 lorsque le dispositif 100 n'est pas en configuration de mesure.

La portion longue 115a du deuxième levier 115 supporte la surface réfléchissante 142 qui lui est donc solidaire. Ainsi, la surface réfléchissante 142 est solidaire en déplacement de la sonde 111 et la mesure du déplacement de la surface réfléchissante 142 au moyen du capteur 141 permet une mesure du déplacement de la sonde 111.

Le capteur 141 et la surface réfléchissante 142 forment un moyen de mesure du déplacement de la sonde 111 agencé pour mesurer le déplacement de la sonde 111 le long d'un axe sensiblement perpendiculaire à la surface interne 210.

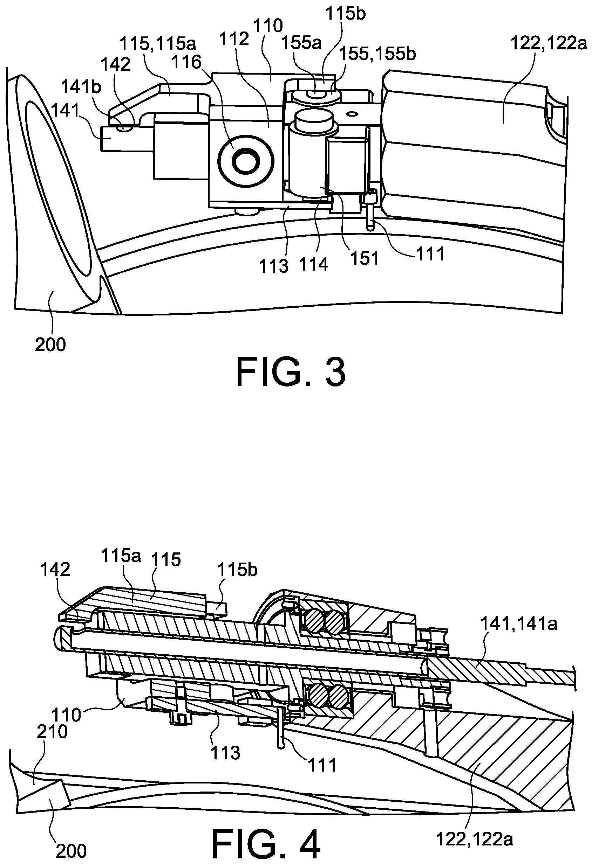

Les figures 3 et 4 illustrent le support de tête et la tête de mesure selon une mise en oeuvre pratique de l'invention. En particulier, dans cette mise en oeuvre pratique de l'invention, le support de tête 130 est partiellement introduit dans la première extrémité 122a du bras 122. Le support de tête est de cette manière monté en rotation au moyen d'un roulement à billes et d'un moteur qui sont logés dans la première extrémité 122a du bras 122.

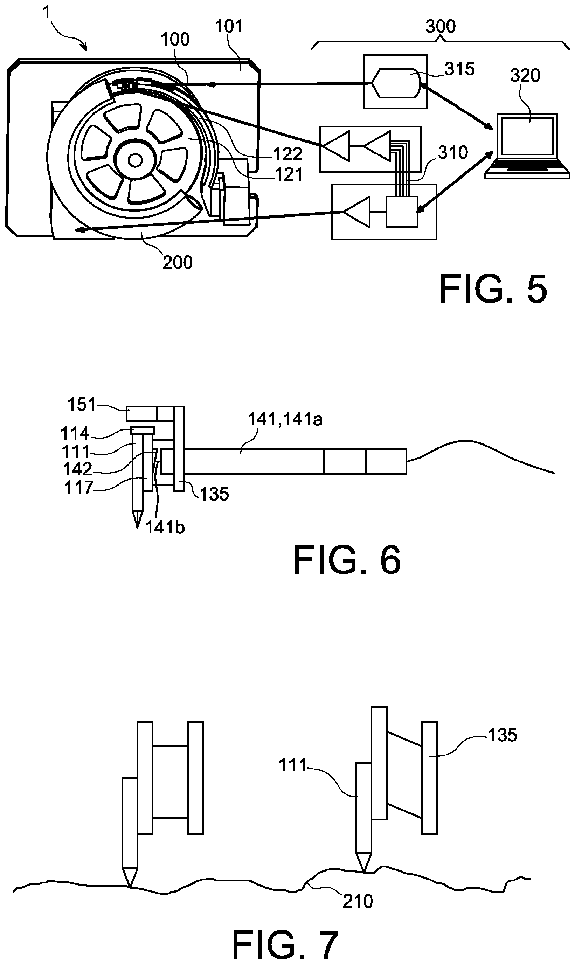

Le dispositif, qu'il soit conforme à la mise en oeuvre pratique ou non, est, comme cela est illustré sur la figure 5, préférentiellement mis en oeuvre au moyen
d'un contrôleur électronique 310 et d'un ordinateur 320.

Le contrôleur électronique 310 est adapté pour contrôler l'alimentation des moteurs de déplacement du plateau 121 et du support de tête 130, et du premier et du deuxième électro-aimant 151, 155b ceci de manière à contrôler le déplacement relatif de la sonde 111 vis-à-vis de la surface interne 210 du tube 200 et la contrainte appliquée à la sonde 111. Le contrôleur électronique 310 est lui-même relié à l'ordinateur.

Le capteur 141 est quant à lui relié à l'ordinateur 320 par l'intermédiaire d'une électronique d'acquisition 315. Ainsi, l'ordinateur 320 est à même, avec un logiciel adéquat, de contrôler le déplacement relatif de la sonde 111 vis-à-vis de la surface interne 210 du tube 200 et à mesurer les déplacements de la sonde 111 selon un axe perpendiculaire à la surface interne 210 du tube 200.

L'ordinateur 320, le contrôleur électronique 310 et l'électronique d'acquisition 315 forment une électronique de contrôle 300 du dispositif 100. L'ensemble dispositif 100 et électronique 300 forment un système de mesure 1.

Un tel dispositif de mesure de l'état de surface peut être mis en oeuvre avec un procédé comportant les étapes suivantes de:
a) installation du tube 200 sur le dispositif de manière à permettre le déplacement relatif de la sonde 111 vis-à-vis du tube 200,
b) mise en place d'une contrainte sur la sonde 111 par le moyen de l'aimant 114 et de l'électro-aimant 151 de manière à contraindre la sonde 111 sur la surface interne du tube,
c) déplacement relatif de la sonde sur la surface interne 210 du tube selon une trajectoire suivant uniquement la ligne directrice 201 au moyen du plateau 121, le déplacement de la sonde 111 le long d'un axe sensiblement perpendiculaire à la surface interne étant enregistré par le capteur 141,
d) déplacement relatif de la sonde 111 d'une première position à une deuxième position le long de la section interne de l'élément creux par le pivotement du support de tête,
e) reproduction de l'étape c)

Selon une mise en oeuvre préféré de l'invention, lors d'un tel procédé de mesure, pendant l'étape d) la première et la deuxième position sont, le long de la section interne, distante l'une de l'autre d'un quart du périmètre intérieur de cette même section interne, et les étapes d) et e) sont reproduites trois fois avec pendant l'étape d) la première et la deuxième position qui sont, décalées le long de la section d'un quart de périmètre intérieur toujours dans le même sens de manière à ce que la sonde à la fin du procédé ait parcouru 4 génératrices reparties le long de la section interne.

Ainsi, il est possible de faire la mesure de l'état de surface le long de quatre génératrices qui sont équidistantes le long de la section interne.

La figure 6 illustre schématiquement une tête 110 de mesure selon un deuxième mode de réalisation dans lequel la tête 110 est montée sur le support de tête 130 au moyen d'un parallélogramme déformable 135.

La tête de mesure 110 selon ce deuxième mode de réalisation comporte:
- un support de sonde 117 monté sur le support de tête 130 au moyen du parallélogramme déformable 135, le support de sonde 117 s'étendant selon une direction sensiblement perpendiculaire à la surface interne 210 du tube 200,
- la sonde 111 qui est montée le long du support de sonde 117 en regard de la surface interne 210 du tube 200,
- un aimant 114 équipant les extrémités de la sonde 111 et du support de sonde 117 se trouvant à l'opposée de la surface interne 210 du tube 200,
- la surface réfléchissante 142 qui est inclinée par rapport de l'axe longitudinal de la sonde 111 de manière à ce qu'un déplacement de la sonde 111 modifie la distance entre la surface réfléchissante 142 et le capteur 141.

L'ensemble des directions ou emplacements relatifs à la surface interne 210 du tube 200, telles que le positionnement de la sonde 111 en regard de la surface interne 210, qui sont mentionnés ci-dessus et en amont et en aval de ce paragraphe, s'entendent par rapport à la surface interne 210 du tube 200 au niveau du contact de la sonde 111 sur cette même surface interne 210.

Selon cette même configuration l'axe optique 141b du capteur 141 est dirigé vers la surface réfléchissante selon une direction sensiblement perpendiculaire à l'axe longitudinal du support de sonde 111, c'est-à-dire sensiblement parallèlement à la tangente de la surface interne 210 du tube 200.

Avec un tel parallélogramme 135 la sonde 111 est apte, comme cela est illustré sur la figure 7, à se déplacer dans la direction perpendiculaire à la surface interne 210 du tube 200. Un seul électro-aimant 151 disposé en regard de l'aimant 114 permet, en fonction de sa polarisation, soit de contraindre la sonde 111 sur la surface interne 210 du tube 200, soit de désengager la sonde 111 de cette même surface interne 210.

Dans l'ensemble des modes de réalisation décrits ci-dessous, le dispositif comprend un plateau monté pivotant pour supporté le tube, ce pivotement de plateau formant le premier moyen de déplacement relatif. Il est également envisageable, sans que l'on sorte du cadre de l'invention, que ce soit la sonde qui soit montée déplaçable par le premier moyen de déplacement relatif, le tube étant monté fixe sur le dispositif pendant la mesure. Ainsi, par exemple, le bras peut prendre la forme d'un rail le long duquel est monté déplaçable en translation. Le bras formant rail et le montage déplaçable en translation de la sonde forment, selon cette possibilité, le premier moyen de déplacement relatif de sonde adapté pour déplacer la sonde relativement à la surface interne selon une trajectoire suivant uniquement la ligne directrice.

## Revendications

1. Dispositif (100) de mesure de l'état de surface de la surface interne (210) d'un élément creux (200) s'étendant selon une ligne directrice (201) courbe et présentant une section interne transverse à ladite ligne directrice (201) sensiblement constante comportant :
- une sonde (111) destinée à être en contact avec ladite surface interne (210),
- un moyen de contrainte destiné à contraindre la sonde (111) sur la surface interne (210) avec une contrainte sensiblement constante et réglable,
- un moyen de mesure du déplacement de la sonde (111) agencé pour mesurer le déplacement de la sonde (111) le long d'un axe sensiblement perpendiculaire à la surface interne (210),
- un premier moyen de déplacement relatif de la sonde (111), adapté pour déplacer la sonde (111) relativement à la surface interne (210) selon une trajectoire suivant uniquement la ligne directrice (201),
le dispositif **étant caractérisé en ce qu'il** comporte en outre un deuxième moyen de déplacement relatif adapté pour déplacer la sonde (111) entre au moins deux positions le long de la section interne, le moyen de contraintes étant adapté pour contraindre la sonde (111) sur la surface interne (210) quelle que soit la position de la sonde (111) le long de la section interne,
et dans lequel le moyen de contraintes comprend au moins un aimant (114) et un électro-aimant (151), l'un étant solidaire de la sonde (111) tandis que l'autre est agencé de manière à rester à distance constante de la ligne directrice (201) en l'absence de mise en oeuvre du deuxième moyen de déplacement relatif.

2. Dispositif (100) selon la revendication 1, dans lequel le deuxième moyen de déplacement relatif comprend un support (130) sur lequel est montée la sonde (111), le support (130) étant mobile vis-à-vis du premier moyen de déplacement relatif de manière à déplacer la sonde (111) entre les au moins deux positions le long de la section interne.

3. Dispositif (100) selon la revendication 1 ou 2, dans lequel le dispositif (100) est adapté pour mesurer l'état de surface d'un élément creux (200) présentant une section interne qui est courbe, le deuxième moyen de déplacement relatif étant préférentiellement adapté pour déplacer la sonde (111) le long de la section interne.

4. Dispositif (100) selon les revendications 2 et 3, dans lequel le premier moyen de déplacement relatif est adapté pour déplacer le support (130) relativement à l'élément creux (200) le long de la ligne directrice (201), le deuxième moyen de déplacement relatif comprenant un montage mobile du support (130) autour de la ligne directrice (201).

5. Dispositif (100) selon la revendication 2, ou l'une quelconque des revendications 3 à 4 en combinaison avec la revendication 2, dans lequel l'un de l'aimant
(114) et de l'électro-aimant (151) est solidaire au support (130), l'autre étant solidaire à la sonde (111).

6. Dispositif (100) selon l'une quelconque des revendications précédentes dans lequel le déplacement de la sonde (111) par le deuxième moyen de déplacement relatif est indexé sur au moins deux positions de la sonde (111) vis-à-vis de la section interne de l'élément creux (200).

7. Dispositif (100) selon l'une quelconque des revendications précédentes, dans lequel le dispositif (100) est adapté pour mesurer l'état de surface d'un élément creux (200) s'étendant selon une ligne directrice (201) courbe et préférentiellement selon une section de cercle.

8. Dispositif (100) selon l'une quelconque des revendications précédentes dans lequel il est prévu un système de désengagement de la sonde qui est adapté pour déplacer la sonde (11) à distance de la surface interne (210) lorsque le dispositif (100) n'est pas en configuration de mesure.

9. Système (1) de mesure comprenant :
- un dispositif (100) de mesure de l'état de surface, et
- une électronique (300) de contrôle du dispositif,
le système (1) **étant caractérisé en ce que** le dispositif (100) est un dispositif selon l'une quelconque des revendications précédentes.

10. Procédé de mesure de l'état de surface de la surface interne (210) d'un élément creux (200) s'étendant selon une ligne directrice (201) courbe et présentant une section interne transverse à ladite ligne directrice (201) sensiblement constante, ledit procédé étant mis en oeuvre au moyen d'un dispositif selon l'une des revendications 1 à 8, ledit procédé comprenant les étapes de :
a) installation de l'élément creux (200) sur le dispositif de manière à permettre le déplacement relatif de la sonde vis-à-vis de l'élément creux (200),
b) mise en place d'une contrainte sur la sonde par le moyen de contrainte de manière à contraindre la sonde sur la surface interne (210) de l'élément creux,
c) déplacement relatif de la sonde sur la surface interne (210) selon une trajectoire suivant uniquement la ligne directrice (201) par le premier moyen de déplacement relatif de la sonde, le déplacement de la sonde (111) le long d'un axe sensiblement perpendiculaire à la surface interne étant enregistré par le moyen de mesure du déplacement de la sonde (111),
d) déplacement relatif de la sonde d'une première position à une deuxième position le long de la section interne de l'élément creux par le deuxième moyen de déplacement relatif,
e) reproduction de l'étape c)

11. Procédé de mesure selon la revendication précédente, dans lequel dans l'étape d) la première et la deuxième position sont, le long de la section interne, distante l'une de l'autre d'un quart du périmètre intérieur de cette même section interne, les étapes d) et e) étant reproduites trois fois avec pendant l'étape d) la première et la deuxième position qui sont décalées le long de la section d'un quart de périmètre intérieur
toujours dans le même sens de manière à ce que la sonde à la fin du procédé ait
parcouru 4 génératrices reparties le long de la section interne.

## Patentansprüche

1. Vorrichtung (100) zur Messung des Oberflächenzustands der Innenoberfläche (210) eines hohlen Elements (200), das sich entlang einer gekrümmten Richtungslinie (201) erstreckt und einen im Wesentlichen konstanten Innenquerschnitt quer zur Richtungslinie (201) aufweist, umfassend:
- eine Sonde (111), die dazu ausgelegt ist, in Kontakt mit der Innenoberfläche (210) zu sein,
- eine Spanneinrichtung, die dazu ausgelegt ist, die Sonde (111) mit einer im Wesentlichen konstanten und einstellbaren Spannung gegen die Innenoberfläche (210) zu spannen,
- eine Einrichtung zur Messung der Verlagerung der Sonde (111), die dazu ausgelegt ist, die Verlagerung der Sonde (111) entlang einer Achse im Wesentlichen orthogonal zur Innenoberfläche (210) zu messen,
- eine erste Einrichtung zur Relativverlagerung der Sonde (111), die dazu ausgelegt ist, die Sonde (111) relativ zur Innenoberfläche (210) entlang einer Trajektorie zu verlagern, die ausschließlich der Richtungslinie (201) folgt,
wobei die Vorrichtung **dadurch gekennzeichnet ist, dass** sie ferner eine zweite Einrichtung zur Relativverlagerung umfasst, die dazu ausgelegt ist, die Sonde (111) zwischen wenigstens 2 Positionen entlang des Innenquerschnitts zu verlagern, wobei die Spanneinrichtung dazu ausgelegt ist, die Sonde (111) gegen die Innenoberfläche (210) unabhängig von der Position der Sonde (111) entlang des Innenquerschnitts zu spannen,
und wobei die Spanneinrichtung wenigstens einen Magneten (114) und einen Elektromagneten (151) umfasst, wobei der eine mit der Sonde (111) verbunden ist, wohingegen der andere dazu ausgelegt ist, in Abwesenheit einer Verwendung der zweiten Einrichtung zur Relativverlagerung in einem konstanten Abstand von der Richtungslinie (201) zu bleiben.

2. Vorrichtung (100) nach Anspruch 1, wobei die zweite Einrichtung zur Relativverlagerung einen Träger (130) umfasst, an dem die Sonde (111) montiert ist, wobei der Träger (130) bezüglich der ersten Einrichtung zur Relativverlagerung derart beweglich ist, dass die Sonde (111) zwischen den wenigstens zwei Positionen entlang des Innenquerschnitts verlagerbar ist.

3. Vorrichtung (100) nach Anspruch 1 oder 2, wobei die Vorrichtung (100) dazu ausgelegt ist, den Oberflächenzustand eines hohlen Elements (200) zu messen, das einen Innenquerschnitt aufweist, der gekrümmt ist, wobei die zweite Einrichtung zur Relativverlagerung vorzugsweise dazu ausgelegt ist, die Sonde (111) entlang des Innenquerschnitts zu verlagern.

4. Vorrichtung (100) nach den Ansprüchen 2 und 3, wobei die erste Einrichtung zur Relativverlagerung dazu ausgelegt ist, den Träger (130) relativ zu dem hohlen Element (200) entlang der Richtungslinie (201) zu verlagern, wobei die zweite Einrichtung zur Relativverlagerung einen beweglichen Aufbau des Trägers (130) um die Richtungslinie (201) herum umfasst.

5. Vorrichtung (100) nach Anspruch 2, oder nach einem der Ansprüche 3 bis 4 in Kombination mit Anspruch 2, wobei der eine von dem Magneten (114) und dem Elektromagneten (151) mit dem Träger (130) verbunden ist, wobei der andere mit der Sonde (111) verbunden ist.

6. Vorrichtung (100) nach einem der vorhergehenden Ansprüche, wobei die Verlagerung der Sonde (111) durch die zweite Einrichtung zur Relativverlagerung an wenigstens zwei Positionen der Sonde (111) bezüglich des Innenquerschnitts des hohlen Elements (200) indexiert ist.

7. Vorrichtung (100) nach einem der vorhergehenden Ansprüche, wobei die Vorrichtung (100) dazu ausgelegt ist, den Oberflächenzustand eines hohlen Elements (200) zu messen, das sich entlang einer gekrümmten Richtungslinie (201) erstreckt und vorzugsweise entlang eines Kreisquerschnitts.

8. Vorrichtung (100) nach einem der vorhergehenden Ansprüche, wobei ein System zum Zurückziehen der Sonde vorgesehen ist, das dazu ausgelegt ist, die Sonde (11) in einem Abstand von der Innenoberfläche (210) zu verlagern, wenn die Vorrichtung (100) nicht in der Messkonfiguration ist.

9. Messsystem (1), umfassend:
- eine Vorrichtung (100) zur Messung des Oberflächenzustands, und
- eine Elektronik (300) zur Steuerung der Vorrichtung,
wobei das System (1) **dadurch gekennzeichnet ist, dass** die Vorrichtung (100) eine Vorrichtung nach einem der vorhergehenden Ansprüche ist.

10. Verfahren zur Messung des Oberflächenzustands der Innenoberfläche (210) eines hohlen Elements (200), das sich entlang einer gekrümmten Richtungslinie (201) erstreckt und einen im Wesentlichen konstanten Innenquerschnitt quer zur Richtungslinie (201) aufweist, wobei das Verfahren mit Hilfe einer Vorrichtung nach einem der Ansprüche 1 bis 8 durchgeführt wird, wobei das Verfahren die folgenden Schritte umfasst:
a) Installieren des hohlen Elements (200) an der Vorrichtung derart, dass die Relativverlagerung der Sonde bezüglich des hohlen Elements (200) ermöglicht wird,
b) Aufbringen einer Spannung auf die Sonde durch die Spanneinrichtung derart, dass die Sonde gegen die Innenoberfläche (210) des hohlen Elements gespannt wird,
c) Relativverlagerung der Sonde auf der Innenoberfläche (210) entlang einer Trajektorie die ausschließlich der Richtungslinie (201) folgt, durch die erste Einrichtung zur Relativverlagerung der Sonde, wobei die Verlagerung der Sonde (111) entlang einer Achse im Wesentlichen orthogonal zur Innenoberfläche durch die Einrichtung zur Messung der Verlagerung der Sonde (111) aufgezeichnet wird,
d) Relativverlagerung der Sonde von einer ersten Position zu einer zweiten Position entlang des Innenquerschnitts des hohlen Elements durch die zweite Einrichtung zur Relativverlagerung,
e) Wiederholung des Schritts c).

11. Verfahren zur Messung nach dem vorhergehenden Anspruch, wobei in dem Schritt d) die erste und die zweite Position entlang des Innenquerschnitts voneinander um ein Viertel des Innenumfangs dieses gleichen Innenquerschnitts beabstandet sind, wobei die Schritte d) und e) dreimal wiederholt werden, wobei während des Schritts d) die erste und die zweite Position entlang des Querschnitts um ein Viertel des Innenumfangs immer in der gleichen Richtung versetzt sind, derart, dass die Sonde am Ende des Verfahrens vier Erzeugende durchlaufen hat, die entlang des Innenquerschnitts verteilt sind.

## Claims

1. Device (100) for measuring the surface roughness of the inner surface (210) of a hollow element (200) extending along a curved guide line (201) and having a substantially constant inner cross-section transverse to said guide line (201), comprising:
- a probe (111) designed to be in contact with said inner surface (210),
- a straining means for straining the probe (111) on the inner surface (210), with a substantially constant and adjustable strain,
- a means for measuring the movement of the probe (111), arranged to measure the movement of the probe (111) along an axis substantially perpendicular to the inner surface (210),
- a first means for relatively moving the probe (111), which is suitable for moving the probe (111) relative to the inner surface (210) along a path only following the guide line (201),
the device being **characterised in that** it also comprises a second relative movement means, suitable for moving the probe (111) between at least two positions along the inner cross-section, the straining means being suitable for straining the probe (111) on the inner surface (210), regardless of the position of the probe (111) along the inner cross-section,
and wherein the straining means includes at least one magnet (114) and one electromagnet (151), one being secured to the probe (111) and the other being positioned such that it remains at a constant distance from the guide line (201) when the second relative movement means is not implemented.

2. Device (100) according to claim 1, wherein the second relative movement means includes a support (130) on which is mounted the probe (111), the support (130) being mobile in relation to the first relative movement means such that the probe (111) is moved between the at least two positions along the inner cross-section.

3. Device (100) according to claim 1 or 2, wherein the device (100) is designed to measure the surface roughness of a hollow element (200) having an inner cross-section in the shape of a curve, the second relative movement means preferably being designed to move the probe (111) along the inner cross-section.

4. Device (100) according to claims 2 and 3, wherein the first relative movement means is designed to move the support (130) in relation to the hollow element (200) along the guide line (201), where the second relative movement means comprises a support assembly (130) that is mobile around the guide line (201).

5. Device (100) according to claim 2, or according to any one of claims 3 to 4 combined with claim 2, wherein one of either the magnet (114) or the electromagnet (151) is secured to the support (130), the other being secured to the probe (111).

6. Device (100) according to any one of the previous claims, wherein the movement of the probe (111) by the second relative movement means is indexed according to at least two positions of the probe (111) in relation to the inner cross-section of the hollow element (200).

7. Device (100) according to any one of the previous claims, wherein the device (100) is designed to measure the surface roughness of a hollow element (200) extending along a curved guide line (201), preferably along a section of a circle.

8. Device (100) according to any one of the previous claims, wherein a probe withdrawal system is provided for, suitable for moving the probe (11) away from the inner surface (210) when the device (100) is not configured for measurement.

9. Measurement system (1) comprising:
- a device (100) for measuring surface roughness, and
- a device control electronic assembly (300),
the system (1) being **characterised in that** the device (100) is a device according to any one of the previous claims.

10. Method for measuring the surface roughness of the inner surface (210) of a hollow element (200) extending along a curved guide line (201) and having a substantially constant inner cross-section transverse to said guide line (201), said method being implemented by means of a device according to one of claims 1 to 8, said method comprising the following steps:
a) installation of the hollow element (200) on the device such that the probe can move relative to the hollow element (200),
b) application of a strain on the probe using the straining means to strain the probe on the inner surface (210) of the hollow element,
c) relative movement of the probe on the inner surface (210) along a path only following the guide line (201) by the first relative movement means of the probe, the movement of the probe (111) along an axis substantially perpendicular to the inner surface being recorded by the means for measuring the movement of the probe (111),
d) relative movement of the probe from a first position to a second position along the inner cross-section of the hollow element by the second relative movement means,
e) repeat step c)

11. Measurement method according to the previous claim, wherein in step d) the first and second positions are, along the inner cross-section, distanced from each other by a quarter of the inner perimeter of said inner cross-section, steps d) and e) being repeated three times where, in step d) the first and second positions are shifted along the cross-section by one quarter of the inner perimeter always in the same direction such that the probe at the end of the method has travelled along 4 guide lines distributed along the inner cross-section.
